# EUROPÄISCHE PATENTSCHRIFT

(11) **EP 2 786 059 B1**
(45) Veröffentlichungstag und Bekanntmachung des Hinweises auf die Patenterteilung: **10.02.2016**
(21) Anmeldenummer: 12794934.5
(22) Anmeldetag: 27.11.2012
(51) Int. Cl.: F16L 59/14

(54) **VERFAHREN ZUR HERSTELLUNG VON GEDÄMMTEN MANTELROHREN IM KONTINUIERLICHEN HERSTELLUNGSPROZESS**
METHOD FOR PRODUCING INSULATED CASING PIPES IN A CONTINUOUS PRODUCTION PROCESS
PROCÉDÉ DE FABRICATION DE TUBES EXTÉRIEURS ISOLÉS DANS UN PROCESSUS DE FABRICATION EN CONTINU

(30) Priorität: 28.11.2011 EP 11190970
(43) Veröffentlichungstag der Anmeldung: 08.10.2014
(73) Patentinhaber: BASF SE, 67056 Ludwigshafen (DE)
(72) Erfinder: ELLERSIEK, Carsten, 49525 Lengerich (DE)
(86) Internationale Anmeldenummer: PCT/EP2012/073658
(87) Internationale Veröffentlichungsnummer: WO 2013/079455

(56) Entgegenhaltungen:
- EP-A1- 0 897 788
- EP-A1- 2 305 443
- DE-A1- 2 803 708
- DE-A1- 3 530 187

## Beschreibung

Die vorliegende Erfindung betrifft ein kontinuierliches Verfahren zur Herstellung von gedämmten Rohren umfassend ein Mediumrohr, ein Mantelrohr, eine Schicht aus wenigstens einem Polyurethan zwischen Mediumrohr und Mantelrohr und einen Folienschlauch zwischen dem wenigstens einen Polyurethan und dem Mantelrohr, umfassend wenigstens die Schritte (A) Bereitstellen eines Mediumrohres und eines aus einer Folie kontinuierlich gebildeten Folienschlauches in einem Backenband, wobei das Mediumrohr innerhalb des Folienschlauches so angeordnet ist, dass zwischen Mediumrohr und Folienschlauch ein Ringspalt ausgebildet wird, (B) Einfüllen eines Polyurethansystems umfassend mindestens eine Isocyanatkomponente (a) und mindestens eine Polyolmischung (b) in den Ringspalt, (C) Aufschäumen und Aushärtenlassen des Polyurethansystems, und (D) Aufbringen einer Schicht aus wenigstens einem thermoplastischen Kunststoff auf den Folienschlauch durch Extrusion, um das Mantelrohr zu bilden, wobei das Einfüllen gemäß Schritt (B) mittels einer entsprechend dem Radius des Ringspaltes gebogenen Mehrfachdüse erfolgt, wobei die Mehrfachdüse ein Kreisbogenstück des Ringspaltes von 20 bis 180° umfasst, und die Öffnungen der Mehrfachdüse so angeordnet sind, dass das Polyurethansystem in Richtung des Folienschlauches eingefüllt wird.

Mit Polyurethanschaumstoffen gedämmte Rohre sind im Stand der Technik bekannt und beispielsweise in EP-A-865 893 und DE-A-197 42 012 beschrieben. Gedämmte Rohrleitungssysteme werden aus einzelnen Rohrsegmenten zusammengefügt. Standardmäßig werden hierfür Rohrlängen von 6 m, 12 m und 16 m verwendet. Benötigte Überhanglängen werden speziell gefertigt oder aus bestehender Konfektionsware zugeschnitten. Die einzelnen Rohrsegmente werden verschweißt und mit bestehender Muffentechnik im Bereich der Schweißnaht nachgedämmt. Diese Muffenverbindungen bergen ein größeres Schadenspotential als die Rohrware selbst. Dieser Unterschied resultiert aus der Tatsache, dass die Rohrlängen unter festgelegten, kontrollierbaren Bedingungen in Produktionshallen hergestellt werden. Die Muffenverbindungen werden oft unter Zeitdruck bei Wind und Wetter vor Ort auf der Baustelle hergestellt. Einflüsse wie Temperatur, Verschmutzungen und Feuchtigkeit beeinflussen oft die Qualität der Muffenverbindungen. Weiterhin stellt die Zahl der Muffenverbindungen einen großen Kostenfaktor bei der Installation von Rohrleitungssystemen dar.

In der rohrverarbeitenden Industrie ist es daher erstrebenswert, möglichst wenige Muffenverbindungen, bezogen auf die Länge einer Leitung, zu installieren. Dies wird erreicht durch den Einsatz von längeren Einzelrohrsegmenten, deren Produktion allerdings erhöhte Anforderungen stellt und häufig zu technischen Problemen führt.

Der größte Teil der Einzelrohre wird mit Hilfe der diskontinuierlichen Rohr-in-Rohr Produktion hergestellt. Im Rahmen dieses Verfahrens wird das Mediumrohr, im Allgemeinen aus Stahl, mit sternförmigen Abstandshaltern versehen, die der Zentrierung des inneren Rohres dienen. Das Mediumrohr wird in das äußere Mantelrohr, im Allgemeinen aus Polyethylen, geschoben, so dass sich ein Ringspalt zwischen beiden Rohren ergibt. Dieser Ringspalt wird mit Polyurethanschaum gefüllt, da dieser hervorragende Dämmeigenschaften aufweist. Hierfür wird das leicht geneigte Doppelrohr mit Abschlusskappen versehen, die mit statischen Entlüftungslöchern ausgestattet sind. Anschließend wird in den Ringspalt mittels einer Polyurethandosiermaschine das flüssige Reaktionsgemisch eingefüllt, welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

In der EP 1 552 915 A2 wird ein Verfahren zur Herstellung von gedämmten Rohren offenbart, wobei ein Polyurethansystem enthaltend eine Isocyanatkomponente und eine Polyolkomponente mit einer niedrigen Viskosität von kleiner 3000 mPas in den Ringspalt aus Mediumrohr und Mantelrohr eingefüllt wird. Nach dem Einfüllen schäumt das Polyurethansystem auf und härtet gleichzeitig aus.

Die EP 1 783 152 A2 offenbart ebenfalls ein Verfahren zur Herstellung von gedämmten Rohren, wobei ein Polyurethansystem enthaltend eine Isocyanatkomponente und eine Polyolkomponente mit besonders niedriger Viskosität von weniger als 1300 mPas in den Ringspalt aus Mediumrohr und Mantelrohr eingefüllt wird.

In den Schriften EP 1 552 915 A2 und EP 1 783 152 A2 werden demnach Verfahren beschrieben, um gedämmte Rohre herzustellen, in denen das Problem einer vollständigen Befüllung des Rohres vor Aufschäumen und Aushärten dadurch gelöst wird, dass Polyolkomponenten mit besonders geringer Viskosität und damit einer guten Fließfähigkeit eingesetzt werden.

EP 2 305 443 A1 offenbart ein Verfahren und eine Vorrichtung zur Herstellung von mit Polyurethan umschäumten Rohren, die auf der Außenseite einen Folienschlauch aufweisen. Um diese Rohre kontinuierlich herstellen zu können, wird eine ringförmige Injektionsdüse über das Innenrohr geschoben und in einen Ringspalt, der aus dem Folienschlauch und dem Innenrohr gebildet wird, Polyurethan-Vorläuferverbindungen eingeführt.

Weiterhin ist für die Qualität der Rohre eine gleichmäßige Rohdichteverteilung des Schaumstoffes wichtig. Diese ist jedoch bei Einsatz der aus dem Stand der Technik bekannten Verfahren nicht vorteilhaft. Gewöhnlich ergibt sich an den Enden eine niedrigere und in der Mitte des Rohres eine höhere Rohdichte. Je länger das Rohr ist, desto höher wird produktionstechnisch bedingt die erforderliche Gesamtrohdichte des Schaumes im Rohrspalt.

Des Weiteren ist es für eine gleichmäßige Rohdichteverteilung essentiell, dass das flüssige Polyurethansystem gleichmäßig in den Ringspalt zwischen Mantelrohr und Mediumrohr eingebracht wird. Durch die aus dem Stand der Technik bekannten Verfahren ist es nicht unbedingt möglich, eine gleichmäßige Verteilung zu gewährleisten.

Bei aus dem Stand der Technik bekannten kontinuierlichen Verfahren ist es von Nachteil, dass große Mengen Polyurethan-Vorläufer-Mischung kontinuierlich in ein sich bewegendes Doppelrohr aus Mediumrohr und Mantelrohr, welches durch Zusammenführen einer länglichen Folie gebildet wird, eingebracht werden muss. Da unter Umständen diese Mischung nicht schnell genug weggefördert werden kann, kann der Schaum vorne aus dem Rohr herauslaufen.

Aufgabe der Erfindung war es, ein kontinuierliches Verfahren zur Herstellung von gedämmten Rohren bereitzustellen, wobei Rohre erhalten werden, welche sich durch eine niedrige und gleichmäßig verteilte Gesamtrohdichte sowie kleine Zelldurchmesser des enthaltenen Polyurethan-Schaumstoffs und damit durch eine geringe Wärmeleitfähigkeit auszeichnen. Des Weiteren ist es eine Aufgabe der vorliegenden Erfindung, ein Verfahren bereitzustellen, durch das es gewährleistet ist, dass das zugeführte Polyurethansystem nicht an einer Seite aus dem gebildeten Rohr herausläuft, sondern vollständig in dem Ringspalt verbleibt. Des Weiteren soll ein gedämmtes Rohr erhalten werden, dass möglichst über die gesamte Länge eine besonders gleichmäßige Dichteverteilung des Polyurethanschaumes aufweist.

Diese Aufgaben werden erfindungsgemäß gelöst durch ein kontinuierliches Verfahren zur Herstellung von gedämmten Rohren umfassend ein Mediumrohr, ein Mantelrohr, eine Schicht aus wenigstens einem Polyurethan zwischen Mediumrohr und Mantelrohr und einen Folienschlauch zwischen dem wenigstens einen Polyurethan und dem Mantelrohr, umfassend wenigstens die Schritte:
(A) Bereitstellen eines Mediumrohres und eines aus einer Folie kontinuierlich gebildeten Folienschlauches in einem Backenband, wobei das Mediumrohr innerhalb des Folienschlauches so angeordnet ist, dass zwischen Mediumrohr und Folienschlauch ein Ringspalt ausgebildet wird,
(B) Einfüllen eines Polyurethansystems umfassend mindestens eine Isocyanatkomponente (a) und mindestens eine Polyolmischung (b) in den Ringspalt,
(C) Aufschäumen und Aushärtenlassen des Polyurethansystems, und
(D) Aufbringen einer Schicht aus wenigstens einem thermoplastischen Kunststoff auf den Folienschlauch durch Extrusion, um das Mantelrohr zu bilden,
wobei das Einfüllen gemäß Schritt (B) mittels einer entsprechend dem Radius des Ringspaltes gebogenen Mehrfachdüse erfolgt, wobei die Mehrfachdüse ein Kreisbogenstück des Ringspaltes von 20 bis 180° umfasst, und die Öffnungen der Mehrfachdüse so angeordnet sind, dass das Polyurethansystem in Richtung des Folienschlauches eingefüllt wird.

Das erfindungsgemäße Verfahren wird kontinuierlich durchgeführt. Das bedeutet insbesondere, dass jeder einzelne Verfahrensschritt kontinuierlich durchgeführt wird.

Die einzelnen Schritte des erfindungsgemäßen Verfahrens werden im Folgenden detailliert erläutert.

### Schritt (A):

Schritt (A) des erfindungsgemäßen Verfahrens umfasst das Bereitstellen eines Mediumrohres und eines aus einer Folie kontinuierlich gebildeten Folienschlauches in einem Backenband, wobei das Mediumrohr innerhalb des Folienschlauches so angeordnet ist, dass zwischen Mediumrohr und Folienschlauch ein Ringspalt ausgebildet wird.

Das Mediumrohr, welches erfindungsgemäß einen geringeren Durchmesser aufweist als der Folienschlauch und als das in Schritt (D) des erfindungsgemäßen Verfahrens gebildete Mantelrohr, ist so innerhalb des Mantelrohres angeordnet, dass sich zwischen Mediumrohr und Mantelrohr ein Ringspalt ausbildet. In diesen Ringspalt wird in dem erfindungsgemäßen Schritt (B) das Polyurethansystem eingefüllt.

Bei dem erfindungsgemäß eingesetzten Mediumrohr handelt es sich im Allgemeinen um ein Stahlrohr mit einem Außendurchmesser von beispielsweise 1 bis 120 cm, bevorzugt 4 bis 110 cm. Die Länge des Mediumrohres beträgt beispielsweise 1 bis 24 Meter, bevorzugt 6 bis 16 Meter. In einer bevorzugten Ausführungsform des erfindungsgemäßen Verfahrens wird als Mediumrohr ein Wickelfalzblech eingesetzt.

Bei der kontinuierlichen Durchführung des erfindungsgemäßen Verfahrens wird das Mediumrohr beispielsweise in Form von Rollenware bereitgestellt. Das Mediumrohr kann auch als Stangenware bereitgestellt werden.

In Schritt (A) des erfindungsgemäßen Verfahrens werden ein Mediumrohr und ein aus einer Folie kontinuierlich gebildeter Folienschlauch in einem Backenband bereitgestellt.

Dazu wird bevorzugt eine längliche Folie kontinuierlich von einer Rolle abgewickelt und durch dem Fachmann bekannte Verfahren, beispielsweise Schweißen, zu einem Folienschlauch zusammengefügt. Dieses Zusammenführen erfolgt in einer bevorzugten Ausführungsform des erfindungsgemäßen Verfahrens in dem Backenband, in dem auch das Mediumrohr kontinuierlich zugeführt wird. Die Folie wird dabei bevorzugt über eine Formschulter bzw. Folienschulter zugeführt wird. Es wird bevorzugt ein kreisrunder Folienschlauch gebildet.

Die erfindungsgemäß eingesetzte Folie weist bevorzugt eine Breite auf, die es erlaubt, einen entsprechenden Folienschlauch zu bilden, der einen Innendurchmesser von im Allgemeinen 6 bis 140 cm, bevorzugt 10 bis 120 cm, aufweist. Diese Folie wird bevorzugt als Rollenware bereitgestellt.

Die erfindungsgemäß eingesetzte Folie kann aus jedem dem Fachmann als geeignet erscheinenden Material gebildet sein, beispielsweise Polyethylen.

Die erfindungsgemäß eingesetzte Folie weist im Allgemeinen jede dem Fachmann als geeignet erscheinende Dicke auf, beispielsweise 5 µm bis 10 µm.

Schritt (A) des erfindungsgemäßen Verfahrens wird bevorzugt bei einer Temperatur durchgeführt, die es erlaubt, dass die Ränder der Folie zu einem entsprechenden Folienschlauch zusammen geführt werden können. Erfindungsgemäß ist es bevorzugt, dass nur an der Stelle, an der die Folie zu einem Schlauch zusammengeführt wird, eine entsprechende Temperatur vorliegt, und der übrige Schritt (A) bei einer Temperatur von 10 °C bis 30 °C, beispielsweise Umgebungstemperatur, durchgeführt wird.

Ein erfindungsgemäß eingesetztes Backenband ist dem Fachmann an sich bekannt. Dabei handelt es sich im Allgemeinen um zwei Umlaufraupen, die je nach Rohrdimension formgebende Aluminiumbacken tragen. Diese Aluminiumbacken sind beispielsweise Rohrhalbschalen, welche bei ihrem Zusammentreffen den kompletten Rohrquerschnitt bilden. In jeder Umlaufraupe sind beispielsweise bis zu 180 Einzelsegmente eingebaut.

Das Mediumrohr wird in Schritt (A) des erfindungsgemäßen Verfahrens innerhalb des Folienschlauches so angeordnet, dass zwischen Mediumrohr und Folienschlauch ein Ringspalt ausgebildet wird. Dabei ist es besonders bevorzugt, dass das Mediumrohr mittig in dem, bevorzugt kreisrunden, Folienschlauch angeordnet ist, so dass ein konzentrischer Ringspalt gebildet wird.

### Schritt (B):

Schritt (B) des erfindungsgemäßen Verfahrens umfasst das Einfüllen eines Polyurethansystems, umfassend mindestens eine Isocyanatkomponente (a) und mindestens eine Polyolmischung (b), in den Ringspalt, wobei das Einfüllen gemäß Schritt (B) mittels einer entsprechend dem Radius des Ringspaltes gebogenen Mehrfachdüse erfolgt, wobei die Mehrfachdüse ein Kreisbogenstück des Ringspaltes von 20 bis 180° umfasst, und die Öffnungen der Mehrfachdüse so angeordnet sind, dass das Polyurethansystem in Richtung des Folienschlauches eingefüllt wird.

Erfindungsgemäß wird zum Einfüllen des Polyurethansystems gemäß Schritt (B) des erfindungsgemäßen Verfahrens eine entsprechend dem Radius des Ringspaltes gebogenen Mehrfachdüse verwendet.

In einer erfindungsgemäß möglichen Ausführungsform ist die eingesetzte Mehrfachdüse beispielsweise ein Stück Rohr, welches entsprechend dem Radius, bevorzugt entsprechend dem mittleren Radius, des Rohrspaltes gebogen ist. Unter "mittlerem Radius" ist erfindungsgemäß ein Radius zu verstehen der zwischen Radius des Mediumrohres und Radius des Folienschlauches liegt, bevorzugt ein Radius, der dem Mittelwert von Radius des Mediumrohres und Radius des Folienschlauches entspricht, wobei eine Abweichung von diesem Mittelwert um 20%, bevorzugt 10%, nach oben und unten möglich ist. Erfindungsgemäß weist das entsprechend gebogene Rohr wenigstens eine Öffnung zum Einbringen des Polyurethansystems in den Ringspalt auf. In einer weiteren bevorzugten Ausführungsform weist das entsprechend gebogene Rohr 1 bis 40, bevorzugt 2 bis 30, besonders bevorzugt 2 bis 20, Öffnungen auf. Die Öffnungen können auf alle dem Fachmann bekannte Arten ausgeführt sein, wobei gewährleistet sein soll, dass das erfindungsgemäß verwendete Polyurethansystem durch die Öffnungen in den Ringspalt eingefüllt werden kann. Beispiele für geeignete Öffnungen sind Schlitze, Bohrungen.

Daher betrifft die vorliegende Erfindung bevorzugt das erfindungsgemäße Verfahren, wobei die Mehrfachdüse aus einem dem Radius, bevorzugt dem mittleren Radius, des Ringspaltes entsprechend gebogenen Rohr mit mindestens einer Öffnung zum Einbringen des Polyurethansystems in den Ringspalt gebildet wird.

Die Länge des erfindungsgemäß entsprechend dem Radius des Ringspaltes gebogenen Rohres ist abhängig von den Durchmessern des Mediumrohres und Folienschlauches. Das Rohr ist bevorzugt kreisförmig gebogen. Im Allgemeinen kann die Länge des kreisförmig gebogenen Rohres über das Kreisbogenstück des Ringspaltes, welches von dem gebogenen Rohr umfasst ist, beschrieben werden. Das gebogene Rohr umfasst ein Kreisbogenstück des Ringspaltes von 20 bis 180°, bevorzugt 30 bis 170°, besonders bevorzugt 40 bis 160°, beispielsweise ein Drittelkreis. Dabei entspricht ein Kreisbogenstück von beispielsweise 180° einem Halbkreis, ein Kreisbogenstück von beispielsweise 90° entspricht einem Viertelkreis.

Die Öffnungen der Mehrfachdüse sind so angeordnet, dass das Polyurethansystem in Richtung des Folienschlauches eingefüllt wird.

Die erfindungsgemäß eingesetzte Mehrfachdüse ist erfindungsgemäß mit allen für den Betrieb notwendigen Vorrichtungen versehen, beispielsweise Zu- und Ableitungen, insbesondere zur Zuleitung des Polyurethansystems. Bevorzugt wird die erfindungsgemäße Mehrfachdüse an einen dem Fachmann bekannten Mischkopf angebracht.

In einer bevorzugten Ausführungsform des erfindungsgemäßen Verfahrens wird das Mediumrohr kontinuierlich zugeführt, eine den Folienschlauch durch Verschweißen bildende Folie wird ebenfalls kontinuierlich zugeführt und an einem Backenband zum Verschweißen übereinander gelegt, und die erfindungsgemäß eingesetzte Mehrfachdüse ist in der Nähe des Backenbandes, bevorzugt innerhalb des ausgebildeten Ringspaltes, angeordnet. Diese Anordnung gewährleistet, dass das eingefüllte Polyurethansystem besonders gleichmäßig verteilt wird und nichts aus dem Ringspalt herausläuft bzw. -tropft.

Im Allgemeinen kann in Schritt (B) des erfindungsgemäßen Verfahrens jedes dem Fachmann als geeignet erscheinende Polyurethansystem eingesetzt werden. Bevorzugt eingesetzte Polyurethansysteme werden im Folgenden detailliert erläutert.

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenytmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die Isocyanatkomponente (a) kann auch in Form von Polyisocyanatprepolymeren eingesetzt werden. Diese Prepolymere sind aus dem Stand der Technik bekannt. Die Herstellung erfolgt auf an sich bekannte Weise, indem vorstehend beschriebene Polyisocyanate (a), beispielsweise bei Temperaturen von etwa 80 °C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im Allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Erfindungsgemäß besonders bevorzugt wird als Isocyanatkomponente (a) Roh-MDI eingesetzt.

In einer bevorzugten Ausführungsform wird die Isocyanatkomponente (a) so gewählt, dass sie eine Viskosität von weniger als 800 mPas, bevorzugt von 100 bis 650, besonders bevorzugt von 120 bis 400, insbesondere von 180 bis 350 mPas, gemessen nach DIN 53019 bei 20 °C, aufweist.

Im Rahmen dieser Erfindung ist es bevorzugt, dass die erfindungsgemäßen Polyurethansysteme und Polyurethanschaumstoffe im Wesentlichen frei von Isocyanuratgruppen sind. Bevorzugt beträgt im Schaumstoff das Verhältnis Isocyanuratgruppe zu Urethangruppe kleiner als 1:10, besonders bevorzugt kleiner als 1:100. Insbesondere sind im erfindungsgemäß eingesetzten Polyurethan-Schaumstoff im Wesentlichen keine Isocyanuratgruppen vorhanden.

Im erfindungsgemäß eingesetzten Polyurethansystem enthält die Polyolmischung (b) im Allgemeinen Polyole als Bestandteil (b1), und gegebenenfalls chemische Treibmittel als Bestandteil (b2). Im Allgemeinen enthält die Polyolmischung (b) physikalische Treibmittel (b3).

Die Viskosität der erfindungsgemäß eingesetzten Polyolmischung (b) (jedoch ohne physikalische Treibmittel (b3)) beträgt im Allgemeinen 200 bis 10000 mPas, bevorzugt 500 bis 9500 mPas, besonders bevorzugt 1000 bis 9000 mPas, ganz besonders bevorzugt 2500 bis 8500 mPas, insbesondere 3100 bis 8000 mPas, jeweils gemessen nach DIN 53019 bei 20 °C. In einer besonders bevorzugten Ausführungsform wird in dem erfindungsgemäßen Verfahren eine Polyolmischung (b) (jedoch ohne physikalische Treibmittel (b3)) eingesetzt, die eine Viskosität von mehr als 3000 mPas, beispielsweise 3100 bis 8000 mPas, jeweils gemessen nach DIN 53019 bei 20 °C, aufweist.

Die vorliegende Erfindung betrifft daher bevorzugt das erfindungsgemäße Verfahren, wobei eine Polyolmischung (b) (jedoch ohne physikalische Treibmittel (b3)) eingesetzt wird, die eine Viskosität von mehr als 3000 mPas, beispielsweise 3100 bis 8000 mPas, jeweils gemessen nach DIN 53019 bei 20 °C, aufweist.

Die Polyolmischung (b) enthält im Allgemeinen physikalische Treibmittel (b3). Die Zugabe von physikalischem Treibmittel führt jedoch zu einer signifikanten Absenkung der Viskosität. Daher ist es ein wesentlicher Punkt der Erfindung, dass die oben gemachten Angaben zur Viskosität der Polyolmischung (b), auch für den Fall, dass sie physikalische Treibmittel enthält, sich auf die Viskosität der Polyolmischung (b) ohne Zusatz von physikalischen Treibmitteln (b3) beziehen.

Als Polyole (Bestandteil b1) kommen im Allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im Allgemeinen 1,9 bis 8, bevorzugt 2,4 bis 7, besonders bevorzugt 2,9 bis 6.

Die Polyole (b1) weisen eine Hydroxylzahl von im Allgemeinen größer als 100 mg KOH/g, bevorzugt größer als 150 mg KOH/g, besonders bevorzugt größer als 200 mg KOH/g auf. Als Obergrenze der Hydroxylzahl hat sich im Allgemeinen 1000 mg KOH/g, bevorzugt 800 mg KOH/g, besonders 700 mg KOH/g ganz besonders 600 KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Bevorzugt enthält Komponente (b1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohole in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphtylamin, Ethylendiamin (EDA), Diethylentriamin, 4,4'-Methylendianilin, 1,3-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Glycerin, Saccharose, Sorbit und EDA verwendet.

Die Polyolmischung kann ferner optional als Bestandteil (b2) chemische Treibmittel enthalten. Als chemische Treibmittel sind Wasser oder Carbonsäuren, insbesondere Ameisensäure als chemisches Treibmittel bevorzugt. Das chemische Treibmittel wird im Allgemeinen in einer Menge von 0,1 bis 5 Gew.-%, insbesondere von 1,0 bis 3,0 Gew.-%, bezogen auf das Gewicht der Komponente (b), eingesetzt.

Wie vorstehend erwähnt, enthält die Polyolmischung (b) im Allgemeinen ein physikalisches Treibmittel (b3). Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, beispielsweise Cyclopentan, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten (b) eingesetzt.

Die vorliegende Erfindung betrifft daher bevorzugt das erfindungsgemäße Verfahren, wobei das Polyurethansystem mit Cyclopentan als physikalischem Treibmittel verschäumt wird.

In einer bevorzugten Ausführungsform enthält die Polyolmischung (b) als Bestandteil (b4) Vernetzer. Unter Vernetzern werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer (b4) werden im Allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel (b3)), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmitteln werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel (b5) werden im Allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel (b3)), eingesetzt.

Die Komponenten (b4) und (b5) können in der Polyolmischung einzeln oder in Kombination eingesetzt werden.

Durch Umsetzung des erfindungsgemäßen Polyurethansystems sind die erfindungsgemäß als Dämmmaterial vorliegenden Polyurethanschaumstoffe erhältlich.

Bei der Umsetzung werden die Polyisocyanate (a) und die Polyolmischung (b) im Allgemeinen in solchen Mengen zur Umsetzung gebracht, dass die Isocyanat-Kennzahl des Schaums 90 bis 240, bevorzugt 90 bis 200, besonders bevorzugt 95 bis 180, ganz besonders bevorzugt 95 bis 160, insbesondere 100 bis 149, beträgt.

In einer bevorzugten Ausführungsform werden die Komponenten (a) und (b) des Polyurethansystems so gewählt, dass der resultierende Schaumstoff eine Druckfestigkeit (bei Rohdichte 60 kg/m³) von größer 0,2 N/mm², bevorzugt größer 0,25 N/mm², besonders bevorzugt grösser 0,3 N/mm², gemessen nach DIN 53421, aufweist.

Im Allgemeinen beträgt in dem erfindungsgemäßen Verfahren die Gesamteinschussrohdichte weniger als 80 kg/m³, bevorzugt weniger als 75 kg/m³, besonders bevorzugt weniger als 70 kg/m³, ganz besonders bevorzugt weniger als 65 kg/m³, insbesondere weniger als 60 kg/m³. Unter Gesamteinschussrohdichte wird im Allgemeinen die Gesamtmenge an eingefülltem flüssigem Polyurethan-Material bezogen auf das Gesamtvolumen des ausgeschäumten Ringspaltes verstanden.

Das erfindungsgemäße Verfahren kann im Allgemeinen bei jeder dem Fachmann als geeignet erscheinenden Verdichtung erfolgen. Unter Verdichtung versteht man den Quotienten aus der Gesamtfülldichte des Ringspaltes dividiert durch die freigeschäumte Kernrohdichte bestimmt an einem unverdichteten Schaumkörper.

Bevorzugt betrifft die vorliegende Erfindung das erfindungsgemäße Verfahren, wobei die Umsetzung bei einer Verdichtung von kleiner 4,0, bevorzugt kleiner 3,5, besonders bevorzugt kleiner 3,0 und ganz besonders bevorzugt kleiner 2,5, durchgeführt wird.

Das in Schritt (B) des erfindungsgemäßen Verfahrens eingesetzte Polyurethansystem enthält bevorzugt einen Katalysator. Erfindungsgemäß können im Allgemeinen alle dem Fachmann als geeignet erscheinende Katalysatoren eingesetzt werden.

Erfindungsgemäß bevorzugt eingesetzte Katalysatoren katalysieren die Treibreaktion, d. h. die Reaktion von Diisocyanat mit Wasser. Diese Reaktion findet überwiegend vor der eigentlichen Polyurethankettenbildung, d. h. der Polymerisationsreaktion, statt und führt daher zu einem schnellen Reaktionsprofil des Polyurethansystems.

Beispiele für erfindungsgemäß einsetzbare Katalysatoren sind ausgewählt aus der Gruppe bestehend aus organischen Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan, Kaliumacetat, Kaliumformiat und/oder Kaliumoctoat, Glycin, N-((2-Hydroxy-5-nonylphenyl)methyl)-N-methyl-mononatrium Salz (CAS-Nummer 56968-08-2), (2-Hydroxypropyl)-trimethylammonium-2-ethylhexanoat (CAS-Nummer 62314-22-1), 1-Propyl-ammonium-2-hydroxy-N,N-trimethyl-formiat, Trimethylhydroxypropylammoniumformiat, 2-((2-(Dimethylamino)ethyl)-methylamino)-ethanol (CAS-Nummer 2212-32-0) und/oder N,N',N"-Tris(dimethylamino-propyl)hexahydrotriazin (CAS-Nummer 15875-13-5) und Mischungen davon.

Die erfindungsgemäß bevorzugten Katalysatoren können dem Polyurethansystem in jeder dem Fachmann bekannten Art zugegeben werden, beispielsweise in Substanz oder als Lösung, beispielsweise als wässrige Lösung.

Bezogen auf die Polyolkomponente (b) wird erfindungsgemäß der mindestens eine Katalysator in einer Menge von 0,01 bis 1,5 Gew.-%, bevorzugt 0,05 bis 1,0 Gew.-%, besonders bevorzugt 0,05 bis 0,5 Gew.-%, ganz besonders bevorzugt 0,1 bis 0,3 Gew.-% zugegeben.

Dem erfindungsgemäß eingesetzten Polyurethansystem können gegebenenfalls auch noch Zusatzstoffe (b6) zugesetzt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen allgemeinen und bevorzugten Viskositätsbereiche der Komponente (b) sich auf eine Polyolmischung (b) inklusive gegebenenfalls zugesetzter Zusatzstoffe (b6) (aber exklusive gegebenenfalls zugesetztem physikalischem Treibmittel (b3)) beziehen.

Die vorliegende Erfindung betrifft daher bevorzugt das erfindungsgemäße Verfahren, wobei die mindestens eine Polyolmischung (b) Polyole (b1), gegebenenfalls chemische Treibmittel (b2), physikalische Treibmittel (b3), Vernetzer (b4), Kettenverlängerungsmittel (b5) und/oder gegebenenfalls Zusatzstoffe (b6), enthält.

Die vorliegende Erfindung betrifft daher insbesondere das erfindungsgemäße Verfahren, wobei als Zusatzstoff (b6) zwischen 1 und 25 Gew.-% Flammschutzmittel, bezogen auf das Gesamtgewicht der Polyolmischung, eingesetzt wird.

### Schritt (C):

Schritt (C) des erfindungsgemäßen Verfahrens umfasst das Aufschäumen und Aushärtenlassen des Polyurethansystems.

Das Aufschäumen und Aushärten erfolgt erfindungsgemäß im Allgemeinen bei einer Komponententemperatur von 18 bis 35 °C, bevorzugt 20 bis 30 °C, besonders bevorzugt 22 bis 28 °C.

Das Aufschäumen und Aushärten erfolgt erfindungsgemäß im Allgemeinen bei Oberflächentemperaturen von 15 bis 50 °C, bevorzugt 20 bis 50 °C, besonders bevorzugt 25 bis 45 °C.

In Schritt (C) des erfindungsgemäßen Verfahrens entweichen Treibmittel und/oder bei der Reaktion entstehende unter den Reaktionsbedingungen gasförmige Stoffe gegebenenfalls durch die offenen Enden des hergestellten Rohres.

Nach Schritt (C) des erfindungsgemäßen Verfahrens wird ein gedämmtes Rohr erhalten mindestens umfassend ein Mediumrohr, einen Folienschlauch und eine dämmende Schicht aus Polyurethan-Schaumstoff zwischen Mediumrohr und Folienschlauch.

Die dämmende Schicht weist im Allgemeinen eine Dicke von 1 bis 20 cm, bevorzugt 5 bis 20 cm besonders bevorzugt 7 bis 20 cm, auf.

In einer weiteren bevorzugten Ausführungsform weist die dämmende Schicht enthaltend Polyurethan-Schaumstoff eine Wärmeleitfähigkeit von weniger als 27 mW/mK, bevorzugt von 22 bis 26,7, gemessen nach EN ISO 8497 auf.

### Schritt (D):

Schritt (D) des erfindungsgemäßen Verfahrens umfasst das Aufbringen einer Schicht aus wenigstens einem thermoplastischen Kunststoff auf den Folienschlauch durch Extrusion, um das Mantelrohr zu bilden.

Nach Schritt (C) des erfindungsgemäßen Verfahrens wird ein Mediumrohr erhalten, welches von einer dämmenden Schicht aus wenigstens einem Polyurethan-Schaumstoff umgeben ist, welcher wiederum von dem in Schritt (A) erzeugten Folienschlauch umgeben ist. Zur Ausbildung des Mantelrohres aus wenigstens einem thermoplastischen Kunststoff wird dieses in Schritt (D) des erfindungsgemäßen Verfahrens durch Extrusion aufgebracht.

Die Extrusion von thermoplastischen Kunststoffen zur Erzeugung einer Schicht, hier das Mantelrohr, ist dem Fachmann an sich bekannt.

Das Aufbringen gemäß Schritt (D) des erfindungsgemäßen Verfahrens wird im Allgemeinen bei einer dem Fachmann für eine Extrusion von thermoplastischen Kunststoffen geeignet erscheinenden Temperatur durchgeführt, beispielsweise oberhalb der Schmelztemperatur des eingesetzten thermoplastischen Kunststoffes. Geeignete Temperaturen sind beispielsweise 180 bis 220°C, bevorzugt 190 bis 230 °C.

Das in Schritt (D) des erfindungsgemäßen Verfahrens gebildete Mantelrohr weist im Allgemeinen eine Dicke von 1 bis 30 mm auf. Der Innendurchmesser des Mantelrohrs richtet sich erfindungsgemäß nach dem Durchmesser des Folienschlauches, beispielsweise beträgt er 6 bis 140 cm, bevorzugt 10 bis 120 cm.

Das Mantelrohr kann gegebenenfalls aus mehreren Schichten bestehen, die beim Extrusionsvorgang zur Herstellung des Mantelrohres zusammengeführt werden können. Ein Beispiel hierfür ist das Einbringen von mehrlagigen Folien zwischen Polyurethan-Schaumstoff und Mantelrohr, wobei die Folie zur Verbesserung der Sperrwirkung mindestens eine metallische Lage enthält. Geeignete Mantelrohre dieses Typs sind in EP-A-960 723 beschrieben. Diese gegebenenfalls vorliegende zusätzliche Schicht wird bevorzugt bereits in Schritt (A) zusammen mit der Folie eingebracht. Beispielsweise können erfindungsgemäß mehrlagige Folien mit Aluminium als Diffusionssperre eingesetzt werden.

Erfindungsgemäß sind im Allgemeinen alle thermoplastischen Kunststoffe geeignet, die für ein entsprechendes gedämmtes Rohr vorteilhafte Eigenschaften aufweisen. Beispiele für erfindungsgemäß einsetzbare thermoplastische Kunststoffe sind ausgewählt aus der Gruppe bestehend aus Polyethylen, Polypropylen und Mischungen davon, bevorzugt wird Polyethylen eingesetzt.

Nach Schritt (D) des erfindungsgemäßen Verfahrens kann das gebildete gedämmte Rohr weiter nach dem Fachmann bekannten Verfahren behandelt werden, beispielsweise durch Zuschneiden des kontinuierlich hergestellten und damit im Prinzip endlosen gedämmten Rohres in gewünschte Längen, beispielsweise 6, 12 oder 75 m.

In einer besonders bevorzugten Ausführungsform handelt es sich bei dem erfindungsgemäß hergestellten gedämmten Rohr um ein gedämmtes Verbundmantelrohr für erdverlegte Fernwärmenetze, welches die Anforderungen von DIN EN 253:2009 erfüllt.

Die vorliegende Erfindung betrifft auch ein gedämmtes Rohr, herstellbar durch das erfindungsgemäße Verfahren. Die bezüglich des erfindungsgemäßen Verfahrens genannten Details des hergestellten gedämmten Rohres gelten entsprechend. Das erfindungsgemäß hergestellte Rohr zeichnet sich durch eine besonders gleichmäßige Dichteverteilung über die gesamte Länge und resultierend hieraus durch geringe Lambda- Werte bei besseren physikalischen Kennwerten aus.

Die vorliegende Erfindung betrifft auch eine Vorrichtung zur Herstellung eines gedämmten Rohres, umfassend eine Vorrichtung zur Zuführung eines Mediumrohres, eine Vorrichtung zur Zuführung einer Folie zur Ausbildung eines Folienschlauches, ein Backenband, eine Vorrichtung zur Extrusion des wenigstens einen Kunststoffs und eine entsprechend dem Radius des Ringspaltes zwischen Mediumrohr und Folienschlauch gebogene Mehrfachdüse, bevorzugt zur Durchführung des erfindungsgemäßen Verfahrens.

Die einzelnen genannten Vorrichtungen sind dem Fachmann an sich bekannt. Für das erfindungsgemäße Verfahren müssen diese an sich bekannten Vorrichtungen entsprechend angeordnet werden.

Des Weiteren enthält die erfindungsgemäße Vorrichtung die erfindungsgemäße Mehrfachdüse. Details und bevorzugte Ausführungsformen zu dieser Mehrfachdüse werden bezüglich des erfindungsgemäßen Verfahrens genannt und sollen auch für die erfindungsgemäße Vorrichtung gelten.

Die vorliegende Erfindung betrifft auch die Verwendung der erfindungsgemäßen Vorrichtung zur Durchführung des erfindungsgemäßen Verfahrens, insbesondere zur Herstellung des erfindungsgemäßen gedämmten Rohres.

### Figur

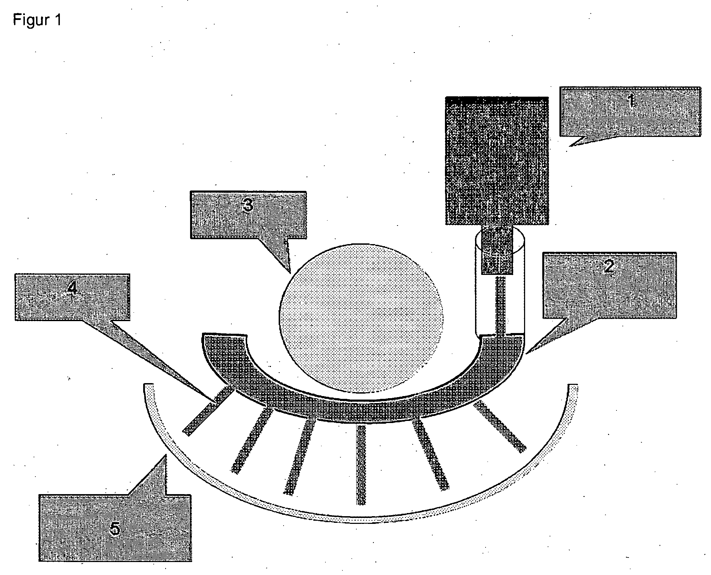

Figur 1 zeigt eine schematische Zeichnung einer erfindungsgemäßen Rohrharke in einem Ringspalt aus Stahlrohr und PE-Folie. Dabei haben die Bezugszeichen die folgenden Bedeutungen:
- 1: Mischkopf
- 2: Rohrharke mit unterschiedlicher Anzahl an Bohrungen, beispielsweise 6 Bohrungen
- 3: Stahlrohr
- 4: Polyurethanschaum
- 5: Trägerfolie PE-LD

## Patentansprüche

1. Kontinuierliches Verfahren zur Herstellung von gedämmten Rohren umfassend ein Mediumrohr, ein Mantelrohr, eine Schicht aus wenigstens einem Polyurethan zwischen Mediumrohr und Mantelrohr und einen Folienschlauch zwischen dem wenigstens einen Polyurethan und dem Mantelrohr, umfassend wenigstens die Schritte:
(A) Bereitstellen eines Mediumrohres und eines aus einer Folie kontinuierlich gebildeten Folienschlauches in einem Backenband, wobei das Mediumrohr innerhalb des Folienschlauches so angeordnet ist, dass zwischen Mediumrohr und Folienschlauch ein Ringspalt ausgebildet wird,
(B) Einfüllen eines Polyurethansystems umfassend mindestens eine Isocyanatkomponente (a) und mindestens eine Polyolmischung (b) in den Ringspalt,
(C) Aufschäumen und Aushärtenlassen des Polyurethansystems, und
(D) Aufbringen einer Schicht aus wenigstens einem thermoplastischen Kunststoff auf den Folienschlauch durch Extrusion, um das Mantelrohr zu bilden,
**dadurch gekennzeichnet, dass** das Einfüllen gemäß Schritt (B) mittels einer entsprechend dem Radius des Ringspaltes gebogenen Mehrfachdüse erfolgt, wobei die Mehrfachdüse ein Kreisbogenstück des Ringspaltes von 20 bis 180° umfasst und die Öffnungen der Mehrfachdüse so angeordnet sind, dass das Polyurethansystem in Richtung des Folienschlauches eingefüllt wird.

2. Verfahren nach Anspruch 1, **dadurch gekennzeichnet, dass** die Mehrfachdüse aus einem dem Radius des Ringspaltes entsprechend gebogenen Rohr mit mindestens einer Öffnung zum Einbringen des Polyurethansystems in den Ringspalt gebildet wird.

3. Verfahren nach Anspruch 1 oder 2, **dadurch gekennzeichnet, dass** als Mediumrohr ein Wickelfalzblech eingesetzt wird.

4. Verfahren nach einem der Ansprüche 1 bis 3, **dadurch gekennzeichnet, dass** als wenigstens ein thermoplastischer Kunststoff Polyethylen eingesetzt wird.

5. Gedämmtes Rohr, hergestellt durch das Verfahren gemäß einem der Ansprüche 1 bis 4.

6. Vorrichtung zur Herstellung eines gedämmten Rohres, umfassend eine Vorrichtung zur Zuführung eines Mediumrohres, eine Vorrichtung zur Zuführung einer Folie zur Ausbildung eines Folienschlauches, ein Backenband, eine Vorrichtung zur Extrusion des wenigstens einen Kunststoffs und eine entsprechend dem Radius des Ringspaltes zwischen Mediumrohr und Folienschlauch gebogene Mehrfachdüse, wobei die Mehrfachdüse ein Kreisbogenstück des Ringspaltes von 20 bis 180° umfasst und die Öffnungen der Mehrfachdüse so angeordnet sind, dass das Polyurethansystem in Richtung des Folienschlauches eingefüllt wird.

7. Verwendung der Vorrichtung gemäß Anspruch 6 zur Durchführung des Verfahrens gemäß einem der Ansprüche 1 bis 4.

8. Verwendung nach Anspruch 7 zur Herstellung des gedämmten Rohres nach Anspruch 5.

## Claims

1. A continuous process for producing insulated pipes comprising a conveying pipe, a jacketing pipe, a layer made of at least one polyurethane between conveying pipe and jacketing pipe, and a foil tube between the at least one polyurethane and the jacketing pipe, comprising at least the following steps:
(A) in a gripper-belt system, providing a foil tube formed continuously from a foil, and providing a conveying pipe, where the arrangement has the conveying pipe within the foil tube in such a way that an annular gap is formed between conveying pipe and foil tube,
(B) charging a polyurethane system comprising at least one isocyanate component (a) and at least one polyol mixture (b) to the annular gap,
(C) foaming the polyurethane system and allowing the same to harden, and
(D) applying a layer made of at least one thermoplastic to the foil tube via extrusion, in order to form the jacketing pipe,
which comprises using a multiple nozzle system having curvature corresponding to the radius of the annular gap to charge the material in step (B), where the multiple nozzle system comprises an arc section of from 20 to 180°C of the annular gap, and the arrangement of the apertures of the multiple nozzle system is such that the polyurethane system is charged in the direction of the foil tube.

2. The process according to claim 1, wherein the multiple nozzle system is formed from a pipe having curvature corresponding to the radius of the annular gap and having at least one aperture for introducing the polyurethane system to the annular gap.

3. The process according to claim 1 or 2, wherein the conveying pipe used comprises a wind-and-fold metal sheet.

4. The process according to any of claims 1 to 3, wherein the at least one thermoplastic used comprises polyethylene.

5. An insulated pipe that is produced by the process according to any of claims 1 to 4.

6. An apparatus for producing an insulated pipe, comprising an apparatus for introducing a conveying pipe, an apparatus for introducing a foil for forming a foil tube, a gripper-belt system, an apparatus for extruding the at least one plastic, and a multiple nozzle system having curvature corresponding to the radius of the annular gap between conveying pipe and foil tube, where the multiple nozzle system comprises an arc section of from 20 to 180°C of the annular gap, and the arrangement of the apertures of the multiple nozzle system is such that the polyurethane system is charged in the direction of the foil tube.

7. The use of the apparatus according to claim 6 for carrying out the process according to any of claims 1 to 4.

8. The use according to claim 7 for producing the insulated pipe according to claim 5.

## Revendications

1. Procédé continu pour la fabrication de tubes isolés, comprenant un tube à fluide, un tube d'enveloppe, une couche en au moins un polyuréthane entre le tube à fluide et le tube d'enveloppe et un tuyau flexible en feuille entre ledit au moins un polyuréthane et le tube d'enveloppe, comprenant au moins les étapes consistant à :
(A) mettre à disposition un tube à fluide et un tuyau flexible en feuille formé en continu à partir d'une feuille dans un convoyeur à mâchoires, le tube à fluide étant disposé dans le tuyau flexible en feuille de manière telle qu'une fente annulaire est formée entre le tube à fluide et le tuyau flexible en feuille,
(B) introduire un système de polyuréthane comprenant au moins un composant isocyanate (a) et au moins un mélange de polyols (b) dans la fente annulaire,
(C) faire mousser et laisser durcir le système de polyuréthane et
(D) appliquer une couche en au moins un matériau synthétique thermoplastique sur le tuyau flexible en feuille par extrusion, pour former le tube d'enveloppe,
**caractérisé en ce que** l'introduction selon l'étape (B) est réalisée au moyen d'une buse multiple coudée en fonction du rayon de la fente annulaire, la buse multiple présentant une section d'arc de cercle de la fente annulaire de 20 à 180° et les ouvertures de la buse multiple étant disposées de manière telle que le système de polyuréthane est introduit dans le sens du tuyau flexible en feuille.

2. Procédé selon la revendication 1, **caractérisé en ce que** la buse multiple est formée à partir d'un tube coudé en fonction du rayon de la fente annulaire, présentant au moins une ouverture pour l'introduction du système de polyuréthane dans la fente annulaire.

3. Procédé selon la revendication 1 ou 2, **caractérisé en ce qu'**on utilise, comme tube à fluide, une tôle agrafée en spirale.

4. Procédé selon l'une quelconque des revendications 1 à 3, **caractérisé en ce qu'**on utilise du polyéthylène comme au moins un matériau synthétique thermoplastique.

5. Tube isolé, fabriqué par le procédé selon l'une quelconque des revendications 1 à 4.

6. Dispositif pour la fabrication d'un tube isolé, comprenant un dispositif pour l'introduction d'un tube à fluide, un dispositif pour l'introduction d'une feuille en vue de former un tuyau flexible en feuille, un convoyeur à mâchoires, un dispositif pour l'extrusion dudit au moins un matériau synthétique et une buse multiple coudée en fonction du rayon de la fente annulaire entre le tube à fluide et le tuyau flexible en feuille, la buse multiple comprenant une section d'arc de cercle de la fente annulaire de 20 à 180° et les ouvertures de la buse multiple étant disposées de manière telle que le système de polyuréthane est introduit dans le sens du tuyau flexible en feuille

7. Utilisation du dispositif selon la revendication 6 pour réaliser le procédé selon l'une quelconque des revendications 1 à 4.

8. Utilisation selon la revendication 7 pour la fabrication du tube isolé selon la revendication 5.
